Europäisches Patentamt

European Patent Office

Office européen des brevets

(19)

(11) **EP 1 435 589 A1**

(12) # EUROPEAN PATENT APPLICATION

(43) Date of publication:
**07.07.2004 Bulletin 2004/28**

(51) Int Cl.[7]: **G06T 7/60**

(21) Application number: **03258121.7**

(22) Date of filing: **22.12.2003**

(84) Designated Contracting States:
**AT BE BG CH CY CZ DE DK EE ES FI FR GB GR
HU IE IT LI LU MC NL PT RO SE SI SK TR**
Designated Extension States:
**AL LT LV MK**

(30) Priority: **27.12.2002 JP 2002379670**

(71) Applicant: **GE Medical Systems Global
Technology Company LLC
Waukesha, Wisconsin 53188 (US)**

(72) Inventors:
• **Ghosh, Pinaki, c/o WIPRO GE Medical Systems
Bangalore, Karnataka State 560017 (IN)**

• **Kumar, Praveen,
c/o John Welch Technology Center
Bangalore, Karnataka State 560017 (IN)**
• **Saxena, Amit, c/o WIPRO GE Medical Systems
Bangalore, Karnataka State 560017 (IN)**
• **Mukhophadhyay, Sudipta,
John F. Welch Tech. Center
Bangalore, Karnataka State 560017 (IN)**
• **Kumar, M. Preetish,
c/o John F. Welch Tech. Center
Bangalore, Karnataka State 560017 (IN)**

(74) Representative: **Pedder, James Cuthbert
London Patent Operation,
General Electric International, Inc.,
15 John Adam Street
London WC2N 6LU (GB)**

(54) **Image processing method and apparatus**

(57)    For the purpose of executing image processing including granulometry in a short period of time, the present invention comprises: obtaining a pattern spectrum of a query image based on a linear structuring element by linear granulometry to define a moment of the pattern spectrum as a signature of the query image; obtaining a pattern spectrum of an image of interest based on a linear structuring element by linear granulometry to define a moment of the pattern spectrum as a signature of the image of interest; and extracting an image of interest having a signature that matches the signature of the query image.

FIG. 11

**Description**

The present invention relates to an image processing method and apparatus, and more particularly to a method and apparatus for image processing including granulometry.

There is a conventional technique in which an image represented by digital data is processed by granulometry, which is one technique of a morphological operation for obtaining a pattern spectrum of the image (for example, see Non-patent Literature 1).

[Non-patent Literature 1]

Maragos, "Pattern Spectrum and Multiscale Shape Representation," *IEEE Trans. Pattern Anal. Machine Intell.* (US), 1989, Vol. 11, No. 7, pp 701 — 716.

Since granulometry is performed by opening an image, and the opening is implemented by a combination of erosion and dilation, various types of image processing incorporating granulometry take a long time to execute.

Therefore the invention seeks to provide an image processing method and apparatus that can accomplish image processing including granulometry in a short period of time.

(1) The present invention, in accordance with one aspect for solving the aforementioned problem, is an image processing method characterized in comprising: obtaining a pattern spectrum of an image represented by digital data based on a linear structuring element by linear granulometry; and defining a moment of the pattern spectrum as a signature of the image.

(2) The present invention, in accordance with another aspect for solving the aforementioned problem, is an image processing apparatus characterized in comprising: spectrum generating means for obtaining a pattern spectrum of an image represented by digital data based on a linear structuring element by linear granulometry; and signature generating means for defining a moment of the pattern spectrum as a signature of the image.

In the invention of the aspects described in (1) and (2), a pattern spectrum is obtained based on a linear structuring element by linear granulometry, so that granulometry is sped up, thus reducing the time for obtaining a signature of an image.

(3) The present invention, in accordance with still another aspect for solving the aforementioned problem, is an image processing method characterized in comprising: obtaining a pattern spectrum of a query image based on a linear structuring element by linear granulometry to define a moment of the pattern spectrum as a signature of the query image; obtaining a pattern spectrum of an image of interest based on a linear structuring element by linear granulometry to define a moment of the pattern spectrum as a signature of the image of interest; and extracting an image of interest having a signature that matches the signature of the query image.

(4) The present invention, in accordance with still another aspect for solving the aforementioned problem, is an image processing apparatus characterized in comprising: first signature generating means for obtaining a pattern spectrum of a query image based on a linear structuring element by linear granulometry to define a moment of the pattern spectrum as a signature of the query image; second signature generating means for obtaining a pattern spectrum of an image of interest based on a linear structuring element by linear granulometry to define a moment of the pattern spectrum as a signature of the image of interest; and extracting means for extracting an image of interest having a signature that matches the signature of the query image.

In the invention of the aspects described in (3) and (4), pattern spectra are obtained for a query image and an image of interest based on a linear structuring element by linear granulometry, and moments of the pattern spectra are defined as signatures of the query image and the image of interest, respectively, so that the time for obtaining the signatures of the query image and the image of interest is reduced, thereby reducing the time for extracting an image of interest having the same contents as those in the query image.

Preferably, a moment invariant of the query image is added as the signature of the query image, and a moment invariant of the image of interest is added as the signature of the image of interest, so that the signatures are enriched.

Preferably, an image of interest having as its signature a moment invariant that matches the moment invariant in the signature of the query image is preferentially extracted, and when such an image of interest cannot be found, an image of interest having as its signature a moment that matches the moment in the signature of the query image is extracted, so that a similar image can be efficiently extracted.

Preferably, the moment comprises first-, second- and third-order moments so that a proper signature can be obtained.

According to the present invention, an image processing method and apparatus that can accomplish image processing including granulometry in a short period of time are provided.

The invention will now be described in greater detail, by way of example, with reference to the drawings, in which:-

Figure 1 is a block diagram of an apparatus in accordance with one embodiment of the present invention.

Figure 2 is a flow chart of an operation of the apparatus in accordance with one embodiment of the present invention.

Figure 3 shows an image.

Figure 4 shows an image.

Figure 5 shows profiles of an image.

Figure 6 shows profiles of an image.

Figure 7 shows a profile of an image.

Figure 8 shows part of a profile of an image.

Figure 9 shows part of a profile of an image.

Figure 10 shows part of a profile of an image.

Figure 11 is a flow chart of an operation of the apparatus in accordance with one embodiment of the present invention.

Figure 12 is a functional block diagram of the apparatus in accordance with one embodiment of the present invention.

Figure 13 is a flow chart of an operation of the apparatus in accordance with one embodiment of the present invention.

Figure 14 is a flow chart of an operation of the apparatus in accordance with one embodiment of the present invention.

Figure 15 is a flow chart of an operation of the apparatus in accordance with one embodiment of the present invention.

Figure 16 is a flow chart of an operation of the apparatus in accordance with one embodiment of the present invention.

Figure 17 is a functional block diagram of the apparatus in accordance with one embodiment of the present invention.

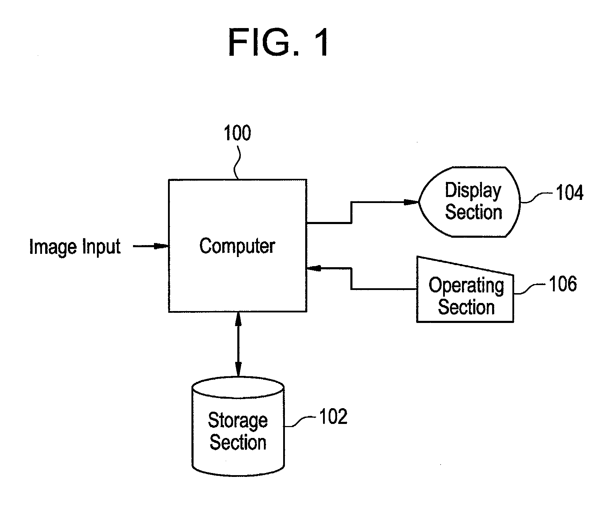

Embodiments of the present invention will now be described in detail with reference to the accompanying drawings. Figure 1 shows a block diagram of an image processing apparatus. The apparatus is an embodiment of the present invention. The configuration of the apparatus represents an embodiment of the apparatus in accordance with the present invention. The operation of the apparatus represents an embodiment of the method in accordance with the present invention.

As shown in Figure 1, the present apparatus comprises a computer 100. The computer 100 is supplied with an input image to be processed. The input image is supplied from, for example, an external database, which is not shown. The input image is, for example, a medical image taken by an X-ray CT apparatus or MRI (magnetic resonance imaging) apparatus. However, the input image is not limited to a medical image.

The computer 100 comprises a storage section 102. The storage section 102 stores the input image. It also stores several kinds of data, programs and the like for the computer 100. Several kinds of data processing involved in image processing are achieved by the computer 100 executing a program stored in the storage section 102.

The computer 100 also comprises a display section 104 and an operating section 106. The display section 104 displays an image output from the computer 100 and other information. The operating section 106 is operated by a user, and supplies several instructions, information and the like to the computer 100. The user interactively operates the present apparatus using the display section 104 and operating section 106.

Image processing by the present apparatus will now be described. The present apparatus executes two types of image processing. One is image analysis and the other is image retrieval. Image analysis will be described first.

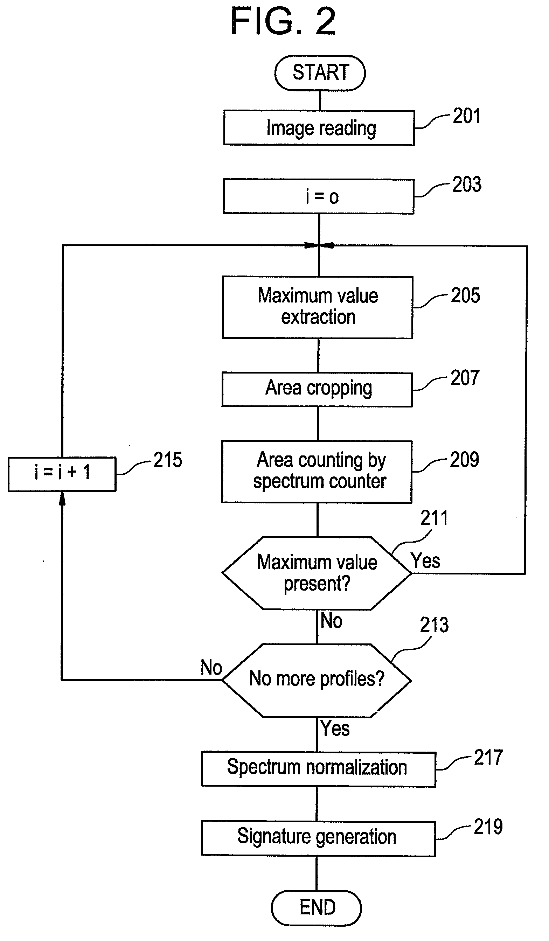

Figure 2 shows a flow chart of an operation of the present apparatus for executing image analysis. The operation of the present apparatus is carried out by the computer 100 executing a program stored in the storage section 102. The same applies to the following description.

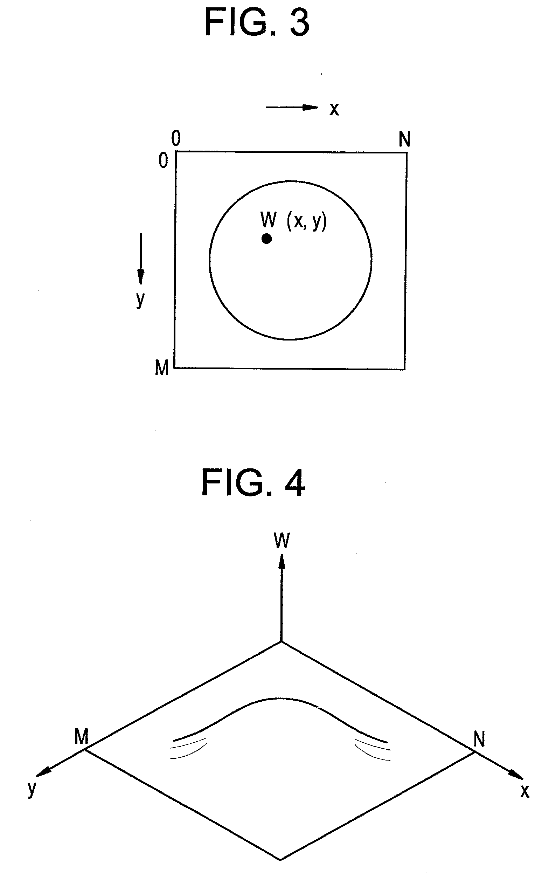

As shown, at Step 201, image reading is executed. At this step, an image as exemplarily shown in Figure 3 is read from an external database or the like and stored in the storage section 102.

The matrix size of the image is $(N + 1) \times (M + 1)$. Particularly, the size is $512 \times 512$, for example. The image is a half-tone image and its pixel value $W(x, y)$ has gradation. When the pixel value $W(x, y)$ is represented by a value on a W-axis perpendicular to x- and y-axes, a distribution of $W(x, y)$ is exemplarily shown in Figure 4.

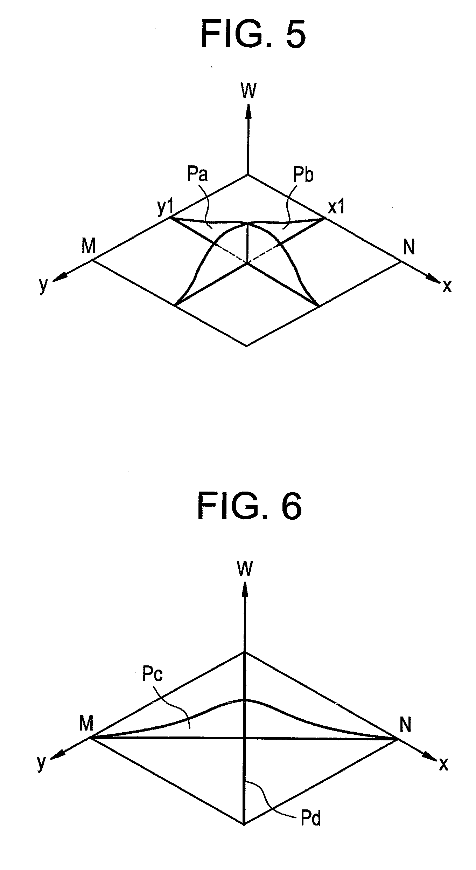

The profiles of such a pixel value distribution are shown in Figure 5. In Figure 5, Pa represents a profile parallel to the x-axis. It is sometimes referred to as a horizontal profile. The profile is located at Y1 on the y-axis. Pb represents a profile parallel to the y-axis. It is sometimes referred to as a vertical profile. The profile is located at X1 on the x-axis.

The profiles may be profiles Pc and Pd in diagonal directions as shown in Figure 6. These are sometimes referred to as diagonal profiles.

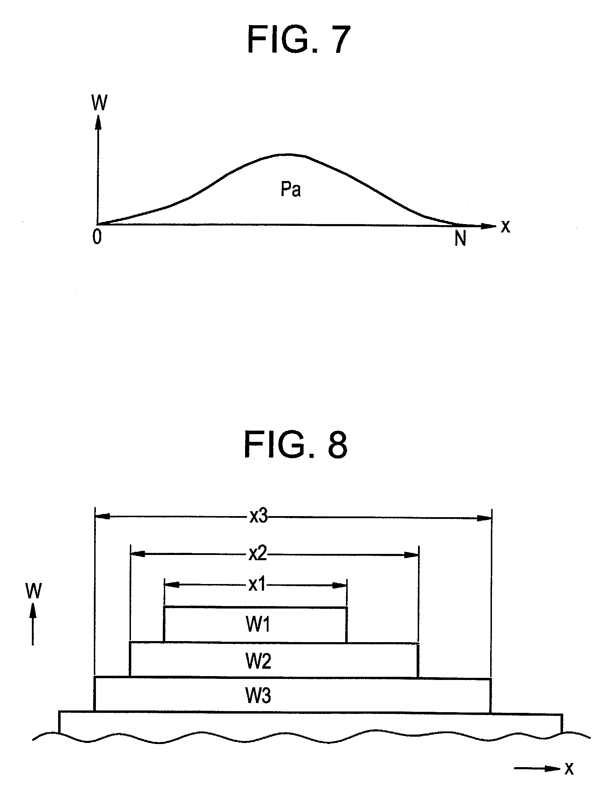

Figure 7 shows the profile Pa. Since the pixel value $W(x, y)$ is digital data, the profile Pa may be represented by discrete values W1, W2, W3,... as shown in Figure 8. The discrete values are ordered in magnitude such that W1 is maximum and W1 > W2 > W3 >.... The difference between W1, W2, W3... is one digit. The profiles Pb — Pd have the similar characteristics.

Next, at Step 203, a count value $i$ of an internal counter is initialized to zero. The count value $i$ indicates a profile index. For the profile Pa, the profile index corresponds to the position on the y-axis. For the profile Pb, the profile index corresponds to the position on the x-axis.

Next, at Step 205, maximum value extraction is executed. The maximum value extraction is performed on any one of the profiles Pa — Pd. Which profile is selected is specified beforehand by the user. Although the following description will be made on a case in which the profile Pa is employed, the same applies to a case in which another profile is employed. The maximum value extraction causes the maximum value W1 in the profile shown in Figure 8 to be extracted.

Next, at Step 207, area cropping is executed. Here, the term "area" refers to a region having the maximum value in the profile. The size of the region in the x-direction is x1, and the size in the W-direction is one digit. Therefore, the size of the area is x1 $\times$ 1 digit = x1.

Next, at Step 209, area counting by a spectrum counter is executed. At this step, the size x1 of the area is counted in the spectrum counter. The spectrum counter is one of the internal counters in the computer 100.

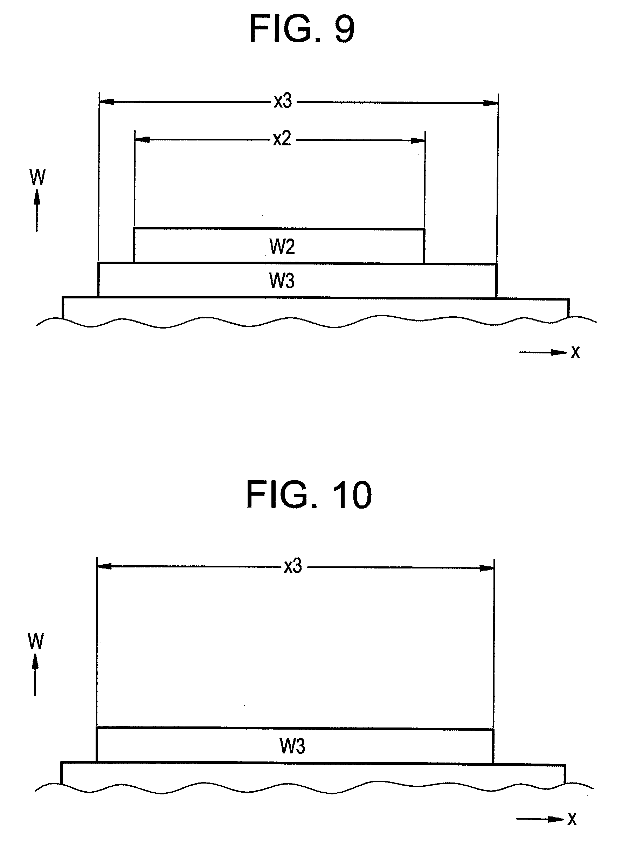

Next, at Step 211, the presence of a maximum value in the profile is checked. The profile now becomes that shown in Figure 9 by the area cropping, and W2 is the maximum value of the profile; thus, the check results in "Yes." When the result is "Yes," the process goes back to Step 205.

Thereafter, the maximum value extraction, area cropping, and area counting are sequentially executed at Steps 205, 207 and 209 similarly to the process described above, and the presence of a maximum value in the profile is checked at Step 211.

The profile now becomes that shown in Figure 10 by the area cropping, and W3 is the maximum value of the profile; thus the check results in "Yes." For such a profile, the presence of a maximum value is checked at Step 211 and the check result "Yes" causes the processing at Steps 205 — 209 to be executed. While the check result is "Yes," the process is repeated.

The profile is thus subjected to the area cropping and the cropped area counting sequentially from the maximum value. The area counting is executed separately for the pixel values Wi ($i$ = 1, 2, 3,...). It should be noted that the area cropping may be conducted starting from the minimum value, contrary to the above-described process. However, the end result is the same.

The area cropping corresponds to the opening in the morphological operation, and therefore, the aforesaid processing is granulometry. However, the opening operator, i.e., the structuring element, is a linear area, unlike in the ordinary operation.

Such a structuring element is referred to as a linear structuring element in this specification. Moreover, granulometry employing the linear structuring element is referred to as linear granulometry.

When all areas in one profile have been cropped by linear granulometry, a pattern spectrum of the profile is obtained as the count value of the spectrum counter. At the same time, the profile has no more maximum values, and the check at Step 211 results in "No."

Next, at Step 213, absence of another profile is checked. If the check result is "No," that is, another profile is present, the count value *i* of the internal counter is incremented by one at Step 215, and the process goes back to Steps 205 — 211. By this process, an adjacent profile is specified, and the same processing is executed on the profile as described above to obtain a pattern spectrum. At this time, the area count is accumulated for each Wi.

Such processing is repeated until no more profiles can be found. When no more profiles can be found, the pattern spectrum of the read image is obtained as the count value of the spectrum counter. The pattern spectrum is normalized at Step 217. This gives a normalized pattern spectrum.

As described above, since the opening is directly achieved by the area cropping in linear granulometry employing a linear structuring element and the combination of erosion and dilation in the conventional technique is not employed, the processing time is reduced, whereby the pattern spectrum can be obtained at a high speed. The speedup of the processing is as much as 300 times relative to the conventional technique.

Next, at Step 219, signature generation is executed. The signature is generated from a moment of the pattern spectrum. Among moments of the pattern spectrum, first-, second- and third-order moments, for example, are used as the signature. The first-, second- and third-order moments are sometimes referred to as mean, variance and skew, respectively, and are given by the following formulae:

$$\text{Mean}, \ \overline{u} = \sum_{x=0}^{N} x * PatternSpectrum[x] / \sum_{x=0}^{N} x, \qquad (1)$$

$$\text{Variance} = \sum_{x=0}^{N} (x - \overline{u})^2 * PatternSpectrum[x] / \overline{u}, \text{ and} \qquad (2)$$

$$\text{Skew} = \sum_{x=0}^{N} (x - \overline{u})^3 * PatternSpectrum[x] / \overline{u}. \qquad (3)$$

These moments have unique values corresponding to image contents, and therefore, they can serve as information indicating image contents, i.e., a signature. The signature may be represented by two or one of these three moments, rather than all of the three moments.

Since the pattern spectrum for use in calculating the signature is obtained at a high speed by linear granulometry, the signature can be obtained in a short period of time after reading an image.

Although the preceding description has been made on a case in which image analysis is performed on the entire image to obtain the signature, the image analysis may be performed on separate portions of an image to obtain respective signatures.

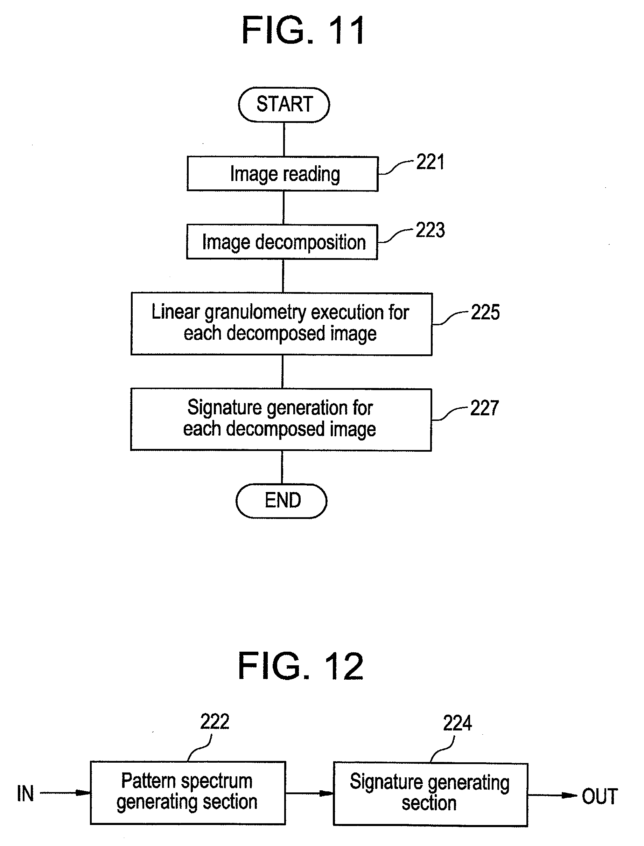

Figure 11 shows a flow chart of such an operation of the present apparatus. As shown, image reading is executed at Step 221, and image decomposition is next executed at Step 223. The image decomposition is processing of decomposing an image into subimages having a certain matrix size around each pixel. The matrix size is 21 × 21, for example.

Next, at Step 225, linear granulometry is executed on each decomposed image. The linear granulometry is achieved by processing similar to that of at Steps 203 — 217 in the flow chart of Figure 2. This gives a pattern spectrum for each decomposed image.

Next, at Step 227, a signature is generated for each decomposed image. The generation of the signature is conducted for each pattern spectrum. The generation of the signature is achieved by processing similar to that at Step 219 in the flow chart of Figure 2.

Thus, a signature corresponding to contents in each portion of an image can be obtained. This processing is also achieved at a high speed because linear granulometry is used.

Figure 12 shows a functional block diagram of the present apparatus from an image analysis point of view. As shown, the present apparatus is comprised of a pattern spectrum generating section 222 and a signature generating section 224. The pattern spectrum generating section 222 is an embodiment of the spectrum generating means of the present invention. The signature generating section 224 is an embodiment of the signature generating means of the present invention.

The pattern spectrum generating section 222 corresponds to the function of Steps 201 — 217 in the flow chart of Figure 2 or the function of Steps 223 and 225 in the flow chart of Figure 11; it generates a pattern spectrum of an input image IN and supplies it to the signature generating section 224. The signature generating section 224 corresponds to the function of Step 219 in the flow chart of Figure 2 or the function of Step 227 in the flow chart of Figure 11; it generates a signature based on a pattern spectrum and outputs the signature.

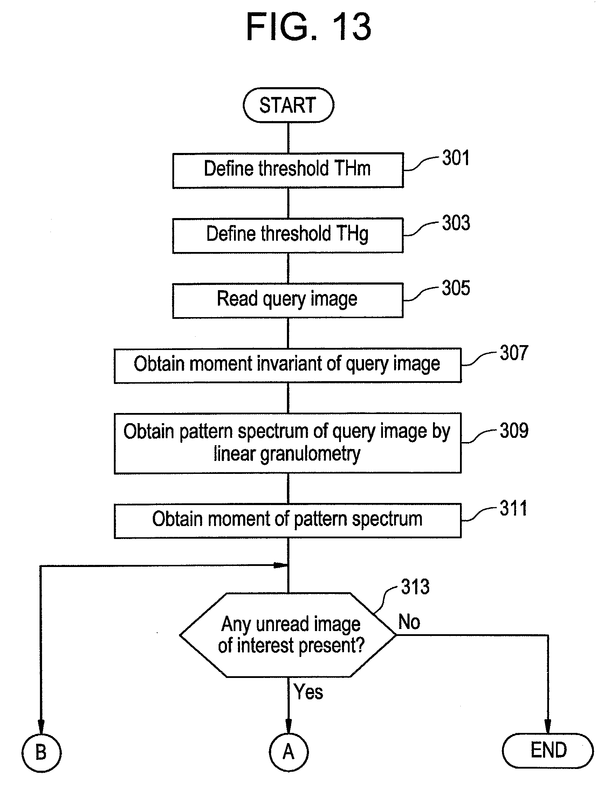

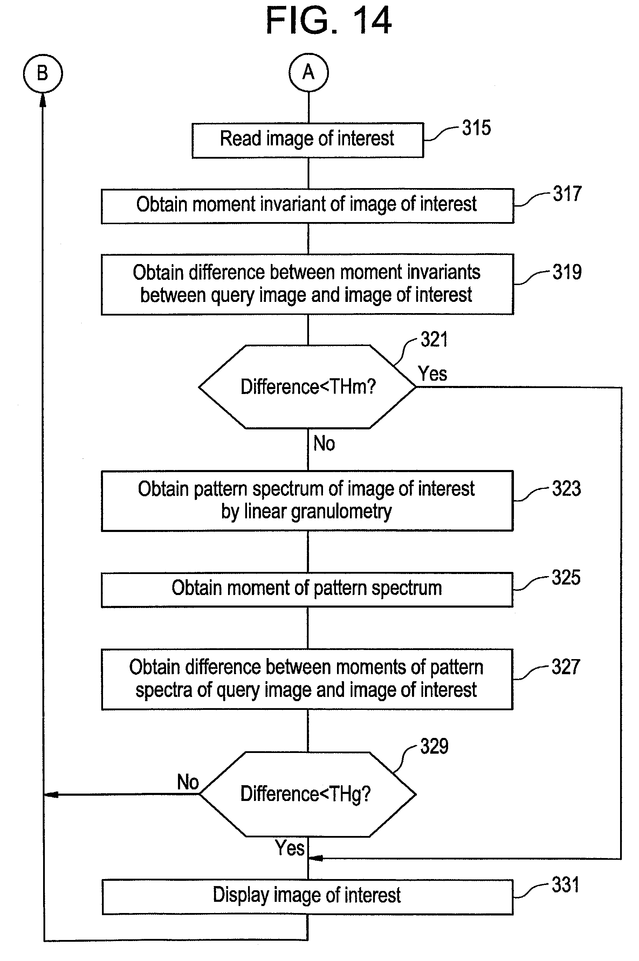

Now image retrieval will be described. A flow chart of an operation of the present apparatus for executing the image retrieval is shown in Figures 13 and 14. Figure 13 shows the first half and Figure 14 shows the last half of the flow chart.

As shown, at Step 301, a threshold THm is defined. The threshold THm is for a moment invariant, which will be described later. The definition of the threshold THm is performed by the user using the display section 104 and operating section 106.

Next, at Step 303, a threshold THg is defined. The threshold THg is for a moment of a pattern spectrum, which will be described later. The definition of the threshold THg is also performed by the user using the display section 104 and operating section 106.

Next, at Step 305, query image reading is executed. The query image reading is executed based on instructions by the user via the operating section 106. At this step, a desired image is read as a query image. The read image is displayed on the display section 104 for confirmation or the like.

Next, at Step 307, a moment invariant of the query image is obtained. The moment invariant may also be used as the signature because it has a unique value corresponding to contents of an image. The moment variant is given by the following formula:

$$\text{Moment invariant} = \log(10 * (M_{oy}^2 + M_{ox}^2) + 4), \qquad (4)$$

where

$$M_{ox} = \sum_{y=0}^{M} \sum_{x=0}^{N} (x - M_x)^2 * W(x,y) / M * N , \qquad (5)$$

$$M_{oy} = \sum_{y=0}^{M} \sum_{x=0}^{N} (x - M_y)^2 * W(x,y) / M * N , \qquad (6)$$

$$M_x = \sum_{y=0}^{M} \sum_{x=0}^{N} x * W(x, y) , \text{ and} \qquad (7)$$

$$M_y = \sum_{y=0}^{M} \sum_{x=0}^{N} y * W(x, y) . \qquad (8)$$

Next, at Step 309, a pattern spectrum of the query image is obtained by linear granulometry. This processing is similar to that of Steps 203 — 217 in the flow chart shown in Figure 2. Next, at Step 311, a moment of the pattern spectrum is obtained. The processing is similar to that of Step 219 in the flow chart shown in Figure 2. Processing up to this step gives the moment invariant and the moment of the pattern spectrum of the query image. These are defined as the signature of the query image.

Next, at Step 313, the presence of an unread image of interest is checked. The images of interest are saved in a database or the like and constitute a collection of images to be searched.

If an unread image of interest is present, image of interest reading is executed at Step 315. At this step, one image of interest is read from the database or the like. Next, at Step 317, a moment invariant of the image of interest is obtained. The moment invariant of the image of interest is calculated using the formula (4). This serves as the signature of the query image.

Next, at Step 319, a difference between the moment invariants of the query image and the image of interest is obtained. The difference is obtained as an absolute value of the difference between the moment invariants. Next, at Step 321, whether the difference is smaller than the threshold THm is checked.

If the check results in "Yes," the image of interest is displayed at Step 331. At this step, the image of interest is displayed on the display section 104. This image has contents identical to or similar to those of the query image because the difference of the moment invariant from that of the query image is smaller than the threshold THm.

An image having contents identical to or similar to those of the query image is thus extracted from the images of interest. By using the moment invariant, image retrieval is achieved unaffected by the difference of measures between the query image and the image of interest.

If the check results in "No," a pattern spectrum of the image of interest is obtained by linear granulometry at Step 323. This processing is similar to that of Steps 203 — 217 in the flow chart shown in Figure 2. Next, at Step 325, a moment of the pattern spectrum is obtained. This processing is similar to that of Step 219 in the flow chart shown in Figure 2. The moment of the pattern spectrum serves as the signature of the query image.

Next, at Step 327, the difference between the moments of the query image and the image of interest is obtained. The difference is calculated by the following formula:

$$D = ((M_{1q} - M_{1r})^2 + (M_{2q} - M_{2r})^2 + (M_{3q} - M_{3r})^2)^{1/2}, \tag{9}$$

where M1q, M2q and M3q are first-, second- and third-order moments, respectively, of the query image, and M1r, M2r and M3r are first-, second- and third-order moments, respectively, of the image of interest. Although the formula uses all three moments, it also applies to a case in which two or one of the three moments are used. The difference calculated by the formula above is sometimes referred to as the Euclidean distance.

Next, at Step 329, whether the difference is less than the threshold THg is checked. If the check results in "Yes," the image of interest is displayed at Step 331. At this step, the image of interest is displayed on the display section 104. This image has contents identical to or similar to those of the query image because, although the difference of the moment invariant from that of the query image is greater than the threshold THm, the difference of the moment is smaller than the threshold THg.

Thus, an image having contents identical to or similar to those of the query image is extracted from the images of interest. By using the moment of the pattern spectrum, image retrieval can be achieved unaffected by the relative positional offset or inclination difference between the query image and the image of interest.

Moreover, since image retrieval by the moment invariant is conducted in preference to image retrieval using the moment of the pattern spectrum, the retrieval by the moment of the pattern spectrum is omitted for an image that has been extracted by the moment invariant. Thus, efficient retrieval can be achieved.

Next, returning to Step 313, the presence of an unread image of interest is checked. The process is also returned to Step 313 to check the presence of an unread image of interest when the contents of the image of interest are not identical to nor similar to those of the query image, i.e., when the check result at Step 329 is "No."

If an unread image of interest is found, similar operation is conducted at Steps 315 — 331, identicalness or similarity of the contents of a new image of interest to those of the query image is checked, and if an identical or similar image is found, the image is displayed on the display section 104.

Such an operation is conducted until no more unread images of interest can be found. In this process, images that meet the conditions are sequentially extracted and displayed. In such image retrieval, since the pattern spectra of the query image and the image of interest are obtained by linear granulometry, the processing time is reduced and image retrieval can be executed at a high speed.

The moments of the query image and the image of interest may be obtained for partial images in a manner similar to that shown in Figure 11, instead of being obtained for the entire images, and such moments may be used as the conditions of the image retrieval. By such a process, an image having contents identical to or similar to that of a portion of the query image can be extracted from among the images of interest.

When the measures of the query image and the image of interest are the same or their difference is small, only the moments of the pattern spectra may be used as the signature without using the moment invariants.

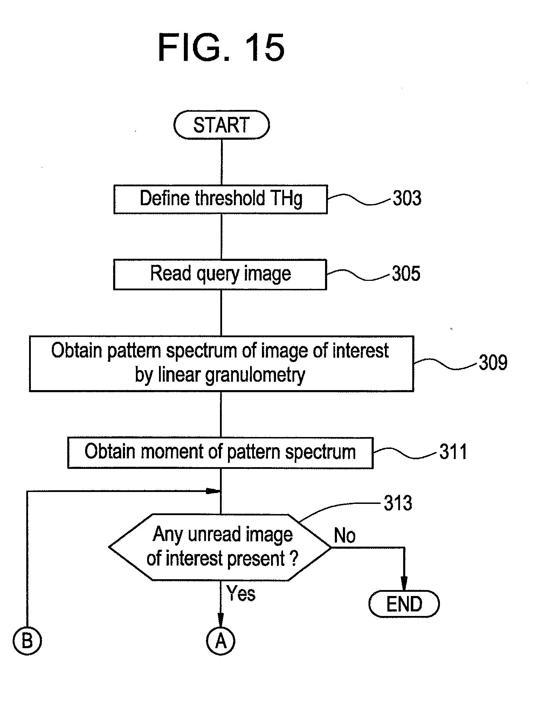

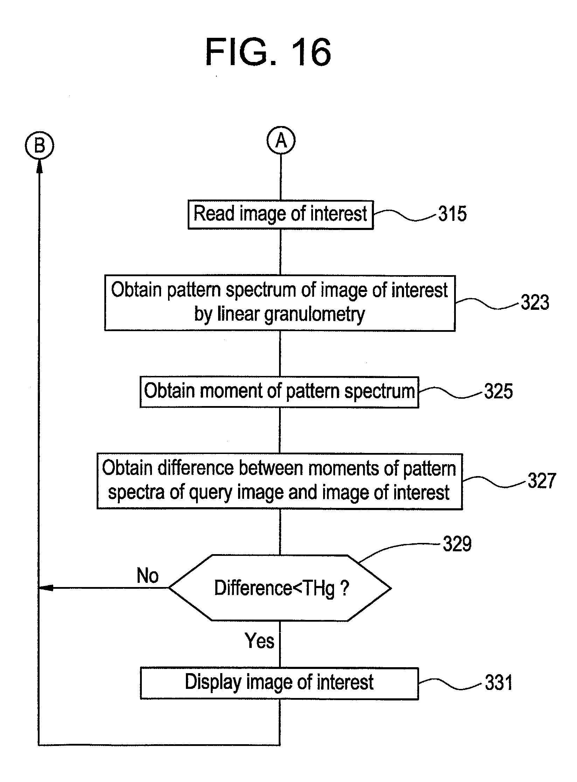

A flow chart in this case is shown in Figures 15 and 16. Figure 15 shows the first half and Figure 16 shows the last half of the flow chart. This flow chart is that shown in Figures 13 and 14 with Steps 301, 307, and 317 — 321 removed.

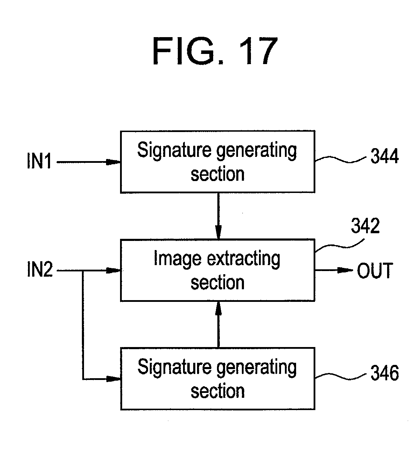

Figure 17 shows a functional block diagram of the present apparatus from an image retrieval point of view. As shown, the present apparatus is comprised of an image extracting section 342 and signature generating sections 344 and 346. The image extracting section 342 is an embodiment of the extracting means of the present invention. The signature generating section 344 is an embodiment of the first signature generating means of the present invention. The signature generating section 346 is an embodiment of the second signature generating means of the present invention.

The signature generating section 344 corresponds to the function of Steps 305 — 311 in the flow chart of Figure 13 or 15; it generates a signature of a query image IN1 and inputs it to the image extracting section 342.

The signature generating section 346 corresponds to the function of Steps 315, 317, 323 and 325 in the flow chart of Figure 14 or the function of Steps 315 — 325 in the flow chart of Figure 16; it generates a signature of an image of interest IN2 and inputs it to the image extracting section 342.

The image extracting section 342 corresponds to the function of Steps 319, 321, 327, 329 and 331 in the flow chart of Figure 14 or the function of Steps 327 — 331 in the flow chart of Figure 16; it extracts an image of interest IN2 that meets the conditions and outputs it.

Many widely different embodiments of the invention may be configured without departing from the spirit and the scope of the present invention. It should be understood that the present invention is not limited to the specific embodiments described in the specification, except as defined in the appended claims.

**Claims**

1. An image processing method comprising the steps of:

   obtaining a pattern spectrum of an image represented by digital data based on a linear structuring element by linear granulometry; and
   defining a moment of the pattern spectrum as a signature of the image.

2. The image processing method of claim 1, wherein said moment comprises first-, second- and third-order moments.

3. An image processing apparatus comprising:

   a spectrum generating device for obtaining a pattern spectrum of an image represented by digital data based on a linear structuring element by linear granulometry; and
   a signature generating device for defining a moment of the pattern spectrum as a signature of the image.

4. An image processing apparatus comprising:

   the first signature generating device for obtaining a pattern spectrum of a query image based on a linear structuring element by linear granulometry to define a moment of the pattern spectrum as a signature of the query image;
   the second signature generating device for obtaining a pattern spectrum of an image of interest based on a linear structuring element by linear granulometry to define a moment of the pattern spectrum as a signature of the image of interest; and
   an extracting device for extracting an image of interest having a signature that matches the signature of the query image.

5. The image processing apparatus of claim 4, wherein
   said first signature generating device adds a moment invariant of the query image as the signature of the query image and
   said second signature generating device adds a moment invariant of the image of interest as the signature of the image of interest.

6. The image processing apparatus of claim 5, wherein said extracting device preferentially extracts an image of interest having as its signature a moment invariant that matches the moment invariant in the signature of the query image, and when such an image of interest cannot be found, extracts an image of interest having as its signature a moment that matches the moment in the signature of the query image.

7. The image processing apparatus of claim 3 or claim 4, wherein said moment comprises first-, second- and third-order moments.

# FIG. 1

# FIG. 2

```
                    ( START )
                         │
          ┌──────────────────────────────┐
          │        Image reading          │──── 201
          └──────────────────────────────┘
                         │
          ┌──────────────────────────────┐
          │            i = o              │──── 203
          └──────────────────────────────┘
                         │
          ┌──────→──────┤◄──────────────────────────┐
          │              │                            │
          │   ┌──────────────────────────┐           │
          │   │     Maximum value          │──── 205  │
          │   │     extraction             │          │
          │   └──────────────────────────┘           │
          │              │                            │
          │   ┌──────────────────────────┐           │
          │   │      Area cropping         │──── 207  │
          │   └──────────────────────────┘           │
          │              │                            │
 ┌───────────┐  ┌──────────────────────────┐         │
 │ i = i + 1 │  │    Area counting by        │──── 209 │
 └───────────┘  │    spectrum counter        │        │
      215       └──────────────────────────┘          │
          ▲              │                     211     │
          │         ╱─────────────╲                    │
          │        ╱ Maximum value  ╲── Yes ───────────┘
          │        ╲   present?     ╱
          │         ╲─────────────╱
          │              │ No             213
          │         ╱─────────────╲
          └── No ───╱ No more profiles? ╲
                    ╲─────────────╱
                         │ Yes
          ┌──────────────────────────────┐
          │     Spectrum normalization    │──── 217
          └──────────────────────────────┘
                         │
          ┌──────────────────────────────┐
          │      Signature generation     │──── 219
          └──────────────────────────────┘
                         │
                    (  END  )
```

# FIG. 3

# FIG. 4

# FIG. 5

# FIG. 6

# FIG. 7

# FIG. 8

# FIG. 9

x3

x2

W

W2

W3

X

# FIG. 10

x3

W

W3

X

# FIG. 11

```
        ( START )
            │
    ┌───────────────┐
    │ Image reading │────221
    └───────────────┘
            │
   ┌──────────────────┐
   │Image decomposition│────223
   └──────────────────┘
            │
 ┌──────────────────────────┐
 │Linear granulometry execution for│────225
 │  each decomposed image   │
 └──────────────────────────┘
            │
 ┌──────────────────────────┐
 │  Signature generation for │────227
 │  each decomposed image   │
 └──────────────────────────┘
            │
         ( END )
```

# FIG. 12

```
              222                         224
         ┌──────────────┐          ┌──────────────┐
  IN ───▶│Pattern spectrum│───────▶│Signature generating│──▶ OUT
         │generating section│      │    section    │
         └──────────────┘          └──────────────┘
```

# FIG. 13

```
                    ( START )
                        │
        ┌───────────────────────────────┐
        │    Define threshold THm        │──── 301
        └───────────────────────────────┘
                        │
        ┌───────────────────────────────┐
        │    Define threshold THg        │──── 303
        └───────────────────────────────┘
                        │
        ┌───────────────────────────────┐
        │       Read query image         │──── 305
        └───────────────────────────────┘
                        │
    ┌───────────────────────────────────────┐
    │  Obtain moment invariant of query image │──── 307
    └───────────────────────────────────────┘
                        │
    ┌───────────────────────────────────────┐
    │ Obtain pattern spectrum of query image by │──── 309
    │          linear granulometry            │
    └───────────────────────────────────────┘
                        │
    ┌───────────────────────────────────────┐
    │   Obtain moment of pattern spectrum     │──── 311
    └───────────────────────────────────────┘
                        │
        ┌───────────────┘
        │               ▼              ──── 313
        │           ╱         ╲    No
        │         ╱  Any unread  ╲────────────┐
        │         ╲ image of       ╱           │
        │          ╲interest present?╱          │
        │            ╲    │    ╱               │
        │                 │ Yes                │
        ▼                 ▼                    ▼
      ( B )             ( A )               ( END )
```

# FIG. 14

Ⓑ        Ⓐ

Read image of interest — 315

Obtain moment invariant of image of interest — 317

Obtain difference between moment invariants between query image and image of interest — 319

Difference<THm? — 321   Yes

No

Obtain pattern spectrum of image of interest by linear granulometry — 323

Obtain moment of pattern spectrum — 325

Obtain difference between moments of pattern spectra of query image and image of interest — 327

No   Difference<THg? — 329

Yes

Display image of interest — 331

# FIG. 15

START

Define threshold THg ⟜ 303

Read query image ⟜ 305

Obtain pattern spectrum of image of interest
by linear granulometry ⟜ 309

Obtain moment of pattern spectrum ⟜ 311

313

Any unread image
of interest present ?　　No

Yes

END

B

A

# FIG. 16

Ⓑ        Ⓐ

Read image of interest ⟋ 315

Obtain pattern spectrum of image of interest by linear granulometry ⟋ 323

Obtain moment of pattern spectrum ⟋ 325

Obtain difference between moments of pattern spectra of query image and image of interest ⟋ 327

329

No ◄ ⟨ Difference<THg ? ⟩

Yes

Display image of interest ⟋ 331

# FIG. 17

IN1 → **Signature generating section** — 344

→ **Image extracting section** — 342 → OUT

IN2 →

→ **Signature generating section** — 346

**European Patent Office**

**EUROPEAN SEARCH REPORT**

Application Number

EP 03 25 8121

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | DOUGHERTY E R ET AL: "Morphological pattern-spectrum classification of noisy shapes: exterior granulometries" PATTERN RECOGNITION, PERGAMON PRESS INC. ELMSFORD, N.Y, US, vol. 28, no. 1, 1995, pages 81-98, XP004014035 ISSN: 0031-3203 | 1-3 | G06T7/60 |
| Y | * page 81 - page 82; figure 2 *<br>--- | 4-7 | |
| Y | HU M-K: "VISUAL PATTERN RECOGNITION BY MOMENT INVARIANTS" IRE TRANSACTIONS ON INFORMATION THEORY, IEEE INC. NEW YORK, US, vol. 8, 1 February 1962 (1962-02-01), pages 179-187, XP000195704 * abstract * * page 179 * * sec. C, "Other Visual Pattern Recognition Models" * * page 186 - page 187 *<br>----- | 4-7 | |

TECHNICAL FIELDS SEARCHED (Int.Cl.7)

G06T

The present search report has been drawn up for all claims

| Place of search | Date of completion of the search | Examiner |
|---|---|---|
| MUNICH | 7 April 2004 | Werling, A |

EPO FORM 1503 03.82 (P04C01)